# NOUVEAU FASCICULE DE BREVET EUROPEEN

(11) **EP 0 977 496 B2**
(45) Date de publication et mention de la décision concernant l'opposition: **20.09.2006**
(45) Mention de la délivrance du brevet: 02.07.2003
(21) Numéro de dépôt: 98922866.3
(22) Date de dépôt: 24.04.1998
(51) Int. Cl.: A23L 1/226, A23L 1/23, A23C 19/064, A23C 19/09

(54) **UTILISATION DE CETOACIDES POUR INTENSIFIER LA FLAVEUR DE PRODUITS A BASE DE FROMAGE**
VERWENDUNG VON KETOSÄURE ZUR GESCMACKSVESTÄRKUNG VON KÄSEPRODUKTEN
USE OF KETO ACIDS TO ENHANCE THE FLAVOUR OF CHEESE PRODUCTS

(30) Priorité: 25.04.1997 FR 9705133
(43) Date de publication de la demande: 09.02.2000
(73) Titulaire: INSTITUT NATIONAL DE LA RECHERCHE AGRONOMIQUE, 75341 Paris Cédex 07 (FR)
(72) Inventeur: YVON, Mireille, F-78120 Rambouillet (FR); GRIPON, Jean-Claude, F-78960 Voisins le Bretonneux (FR)
(74) Mandataire: Vialle-Presles, Marie José
(86) Numéro de dépôt international: PCT/FR1998/000828
(87) Numéro de publication internationale: WO 1998/048645

(56) Documents cités:
- EP-A- 0 651 949
- WO-A-96/10927
- FR-A- 2 132 783
- FR-A- 2 132 784
- FR-A- 2 606 255
- US-A- 4 020 185
- M.YVON ET AL.: "An aminotransferase from Lactococcus lactis initiates conversion of amino acids to cheese flavor compounds" APPLIED AND ENVIRONMENTAL MICROBIOLOGY, vol. 63, no. 2, février 1997, WASHINGTON D.C., pages 414-419, XP002053465 cité dans la demande
- CHEMICAL ABSTRACTS, vol. 76, no. 11, 13 mars 1972 Columbus, Ohio, US; abstract no. 57882n, K.H.NEY ET AL: "Unsubstituted aliphatic monocarboxylic acids,alpha-keto acidsand amines in Cheddar cheese flavor" page 335; colonne 1; XP002053466 & Z.LEBENSM.-UNTRES.-FORSCHUNG, vol. 146, no. 6, 1971, pages 337-343,
- CHEMICAL ABSTRACTS, vol. 78, no. 5, 5 février 1973 Columbus, Ohio, US; abstract no. 28086s, K.H.NEY ET AL.: "Flavor of Edelpilzkaese,a German blue mold cheese" page 374; colonne 1 2; XP002053467 & Z.LEBENSM.-UNTERS.-FORSCHUNG, vol. 149, no. 5, 1972, pages 275-279,
- S.D. Braun et al, Journal of Food Biochemistry, "Production of flavour compounds : aldehydes and alcohols from leucine by microencapsulated cell-free extracts of streptococcus lactis var. maltigenes", vol. 7, pages 23-41, 1983
- S.D. Braun et al,Journal of Dairy Science, "Regulating flavour compounds synthesis and cofactor recycling in heterogenous enzymatic reactions by mixtures of bacterial cell-free extracts", vol. 69, pages 1209-1218, 1986
- Dairy dictionary, E52-E53, 1988
- J. Adrian et al "La science alimentaire de A à Z", Chaire de biochimie industrielle et agro alimentaire, Conservatoire national des arts et métiers, pages 15-17, 242-243, 173, 174, 2ème édition, 1995
- L.P. Langeveld, Neth. Milk Dairy Journal, vol. 29, pages 135-144, 1975

## Description

La présente invention est relative à des moyens d'amélioration de la flaveur des fromages et des spécialités fromagères.

Les fromages à pâte pressée sans flore de surface, fabriqués avec essentiellement des lactocoques, ont peu de flaveur ; le développement de celle-ci requiert des durées d'affinage très longues, de l'ordre de 3 à 6 mois, voire plus, pour des fromages de type Gouda ou Cheddar, alors que la plupart de ces pâtes sont commercialisées après des temps d'affinage beaucoup plus courts (de l'ordre de quelques semaines).

Un des principaux objectifs des industriels fromagers est d'intensifier la flaveur de ces fromages, sans modifier de façon importante leur technologie de fabrication, et sans allonger le temps d'affinage.

La dégradation enzymatique des acides aminés est une des voies de production de molécules aromatiques. En effet, les acides aminés, et en particulier les acides aminés aromatiques, les acides aminés ramifiés, et les acides aminés soufrés sont des précurseurs de composés d'arôme de type aldéhyde, alcool, acide ou thiol. Certains de ces composés ont été identifiés dans des fromages et participent à leur flaveur [(DUMONT et al., Lait 54:31-43, (1974) ; MC CUGAN, J. Agric. Food Chem. 23:1047-1050, (1975), GREEN et MANNING, J. Dairy Res. 49:737-748, (1982), NEY et WIROTAMA, Z. Lebensm.-Unters,-Forsch. 146:337-343, (1971)].

Il a donc été proposé d'intensifier la protéolyse dans les fromages de façon à augmenter la quantité d'acides aminés libres. Le système protéolytique des lactocoques a été largement étudié, plusieurs peptidases ont été purifiées et caractérisées, et leurs gènes ont été clonés et séquencés [LAW et MULHOLLAND, Int. Dairy J. 5:833-854, (1995)]. Des souches génétiquement modifiées, qui surexpriment ces peptidases ont été construites ; l'utilisation de telles souches pourfabriquer des fromages de type « Cheddar » a récemment été décrite [MC GARRY et al., Appl. Environ. Microbiol. 60:4226-4233, (1994), CHRISTENSEN et al., Int. Dairy J. 5:367-379, (1995)]. Cependant, bien que la surexpression des peptidases augmente l'accumulation des acides aminés libres, elle n'affecte pas significativement le développement de la flaveur. Il semble donc que les facteurs limitant le développement de la flaveur ne se situent pas au niveau de la production d'acides aminés libres, mais interviennent également au niveau de leur dégradation.

Des activités de transformation d'acides aminés en composés d'arôme existent cependant chez les lactocoques. ENGELS et VISSER, [Neth. Milk Dairy J. 50:3-17, (1996)] ont montré que des flaveurs typiques de Gouda pouvaient être générées en incubant des extraits cellulaires de lactocoques avec de la méthionine. L'enzyme supposée responsable de cette transformation a été purifiée et caractérisée ; il s'agit d'une cystathionine β-lyase [ALTING et al., Appl. Environ. Microbiol. 61:4037-4042, (1995)].

Il a également été observé que les lactocoques étaient capables de dégrader *in vitro* les acides aminés aromatiques et les acides aminés ramifiés, en composés d'arôme de type hydroxyacide et acide. La première étape de la dégradation de ces acides aminés est une transamination qui nécessite la présence d'un cétoacide accepteur [THI-ROUIN et al., abstr. M4, Club des Bactéries Lactiques - 7ème Colloque, Paris, France (1995)]. La transamination intervient également dans la dégradation de la méthionine en méthanethiol [ALTING et al., Fifth symposium on Lactic acid bacteria: Genetics, metabolism and applications, Veldhoven, The Netherland, 8-12 septembre 1996].

A partir d'une souche de L. *lactis* ssp *cremoris,* l'équipe des Inventeurs a purifié et caractérisé une amino-transférase, et a constaté que dans un milieu liquide simple contenant du glucose, cette enzyme pouvait, en présence d'α-cétoglutarate, catalyser la transamination des trois acides aminés aromatiques (phénylalanine, tryptophane et tyrosine), de la leucine, et de la méthionine ; cette enzyme est active dans des conditions de température, de pH, et de force ionique, analogues à celles rencontrées lors de l'affinage du fromage [YVON et al., Appl. Env. Microbiol., 63, 414-419 (1997)]. L'équipe des Inventeurs a d'autre part, identifié deux autres aminotransférases actives sur les acides aminés ramifiés, et qui utilisent l'α-cétoglutarate et, à un moindre degré, l'oxalo-acétate comme accepteur du groupement aminé. Ces cétoacides peuvent provenir de la dégradation du glutamate ou de l'aspartate, qui sont toujours présents dans les fromages en quantité importante, ou bien être synthétisés à partir de l'acétyl-CoA, la portion du cycle de Krebs entre l'oxalo-acétate et l'α-cétoglutarate apparaissant être opérationnelle chez les lactocoques [LOUBIERE et al., Le Lait 76 (1-2): 5-12, (1996)].

Cependant, les Inventeurs ont constaté que dans des fromages expérimentaux fabriqués avec la souche de *L. lactis* ssp *cremoris* mentionnée ci-dessus, la dégradation des acides aminés aromatiques était en fait très faible (2 à 5%), ce qui laissait supposer l'existence de facteurs limitant cette dégradation dans les fromages. Parmi ces facteurs limitants, le plus probable se situait au niveau de la diffusion des acides aminés et de leur transport à l'intérieur des cellules bactériennes énergétiquement épuisées (du fait qu'au moment de l'affinage, la quasi-totalité des sucres utilisable comme source d'énergie a déjà été consommée).

Néanmoins, les Inventeurs ont émis l'hypothèse que la quantité de cétoacides accepteurs présents dans le fromage représentait le premier facteur limitant.

Pour vérifier cette hypothèse, les Inventeurs ont dans un premier temps étudié, dans des milieux liquides simples, l'effet de l'addition d'α-cétoglutarate et d'oxaloacétate sur la dégradation d'acides aminés aromatiques et ramifiés par des cellules entières de lactocoques. Ils ont ainsi constaté que l'addition d'α-cétoglutarate augmentait la dégradation des acides aminés aromatiques et ramifiés, et que l'addition d'oxaloacétate augmentait celle des acides aminés ramifiés. Ils ont ensuite cherché à confirmer ce résultat dans des fromages, et ont constaté que dans ce cas, seule l'addition d'α-cétoglutarate avait une action sur la dégradation des acides aminés. La présente Invention concerne l'utilisation d'α-cétoglutarate comme additif de préparation, pour intensifier la flaveur d'un fromage ou d'un produit alimentaire à arôme de fromage dont la préparation comprend une étape de maturation (affinage) en présence de bactéries lactiques, et en particulier de lactocoques. Cette intensification de la flaveur résulte de l'augmentation du catabolisme des acides aminés par lesdites bactéries.

La présente invention peut être mise en oeuvre dans le cadre de la fabrication de différents types de fromages. Elle est particulièrement intéressante pour la fabrication de fromages à pâte pressée sans flore de surface, notamment de fromages à croûte artificielle. Elle peut également être mise en oeuvre dans le cadre de la fabrication de produits alimentaires auxquels on souhaite conférer un arôme de fromage, parmi lesquels on citera en particulier les produits alimentaires dont au moins l'un des ingrédients est obtenu à partir d'un caillé ou d'un concentré de protéines laitières (caséine + protéines de lactosérum), tels que les bases fromagères modifiées enzymatiquement (« Enzyme Modified Cheese »), les spécialités fromagères, les fromages fondus, les fromages à taux de matière grasse réduit.

L'Invention a en particulier pour objet un procédé d'obtention d'un fromage ou d'un produit alimentaire à arôme de fromage, caractérisé en ce que l'on utilise, pour intensifier la flaveur dudit produit, un additif de préparation comprenant au moins de l'α-cétoglutarate.

Selon un mode de mise en oeuvre préféré de la présente invention, la préparation dudit produit comprend une étape de maturation en présence d'au moins une bactérie lactique appartenant à l'un des genres *Lactococcus, Lactobacillus, Streptococcus,* et *Leuconostoc,* et l'on additionne ledit additif audit produit, préalablement à ladite étape de maturation ou au cours de celle-ci.

Selon un mode de réalisation préféré de la présente invention, ladite bactérie lactique est choisie dans le groupe constitué par *Lactococcus lactis* ssp *lactis, Lactococcus lactis* ssp. *cremoris, Lactococcus lactis* ssp. *diacetylactis, Lactobacillus delbrueckii lactis, Lactobacillus delbrueckii bulgaricus, Lactobacillus plantarum, Lactobacillus* helveticus, *Lactobacillus paracasei, Streptococcus thermophilus.*

Lorsque ledit additif comprend de l'α-cétoglutarate, la réaction de transamination produit d'une part des précurseurs de composés d'arôme et d'autre part du glutamate, qui est par ailleurs un exhausteur de goût.

La quantité d'additif que l'on utilise peut varier selon le degré d'intensification de la flaveur que l'on vise à obtenir. Par exemple, l'α-cétoglutarate peut généralement être utilisé à raison de 0,5 à 10 mg par gramme de produit non-maturé (on entend par produit non-maturé le caillé égoutté, ou le rétentat d'ultrafiltration, dans le cas des produits obtenus par ultrafiltration de lait)

Pour la mise en oeuvre de l'invention, ledit additif peut être introduit directement ou indirectement dans le produit en cours de fabrication. L'introduction directe peut être effectuée facilement par exemple par trempage du produit non-maturé ou en cours de maturation, dans une solution d'α-cétoglutarate, ou imprégnation du produit avec une solution concentrée d'α-cétoglutarate, avant ou après le salage, ou par addition du cétoacide dans le sel ou dans la saumure utilisés pour le salage, ou au moment du délactosage dans le cas des fromages à pâte délactosée, ou encore, dans le cas des produits obtenus par ultrafiltration, par addition au rétentat d'ultrafiltration.

Avantageusement, lorsque l'α-cétoglutarate est introduit dans la saumure utilisée pour le salage, il est additionné à celle-ci à raison de 10 à 100 grammes par litre de saumure.

L'introduction indirecte peut se faire par l'addition d'une souche capable de produire de l'α-cétoglutarate à partir du glutamate présent dans les fromages. Il pourrait s'agir soit d'une souche de lactocoque ou d'une autre bactérie lactique, ou d'un autre microorganisme d'affinage, sélectionnée, ou génétiquement modifiée.

L'objet de la présente invention englobe également un procédé d'obtention d'un fromage, ou produit alimentaire à arôme de fromage, comprenant une étape de maturation en présence de bactéries lactiques, caractérisé en ce que l'on utilise, pour intensifier la flaveur dudit producteur en augmentant le catabolisme des acides aminés par lesdites bactéries, un additif de préparation comprenant de l'α-céto-glutarate.

La présente invention sera mieux comprise à l'aide du complément de description qui va suivre, qui se réfère à des exemples montrant l'influence de l'addition d'un cétoacide sur le catabolisme des acides aminés par les lactocoques, et de l'addition d'α-cétoglutarate dans des fromages sur leurs qualités organoleptiques, et sur la dégradation des acides aminés dans ces fromages.

### EXEMPLE 1 - EFFET DE L'ADDITION D'α-CETOGLUTARATE OU D'OXALOACETATE SUR LA DEGRADATION DES ACIDES AMINES PAR LES CELLULES DE LACTOCOQUES EN MILIEU LIQUIDE.

Le catabolisme des acides aminés par des cellules de lactocoque a été étudié dans différents milieux, en présence ou en l'absence de cétoacides.

Deux séries de milieux ont été utilisées.
- Une première série se compose de tampon Tris/HCl 100 mM, pH8 avec 2 mM de l'acide aminé étudié non marqué, et 0,05 µM du même acide aminé tritié. A ces milieux de base, 10 mM d'α-cétoglutarate ou d'oxaloacétate ont été ajoutés.
- La deuxième série de milieux se compose du même tampon Tris/HCl 100 mM pH 8 avec 2 mM de l'acide aminé non marqué et 0,05 µM de l'acide aminé tritié, plus 0,3% de glucose. Comme précédemment, 10 mM d'α-cétoglutarate ou d'oxaloacécate ont été ajoutés aux milieux de base.

Les cellules provenant de 4 ml d'une culture de la souche dans un milieu chimiquement défini [SMID and KONIMGS, J. Bacteriol. 174:5286-5292, (1990)] sont incubées dans 0,5 ml des différents milieux, à 37°C. Des aliquotes sont prélevées après 10, 20 et 40 heures d'incubation, les cellules sont éliminées par centrifugation (8000 g, 5 min.), et les métabolites sont séparés par HPLC et identifiés par comparaison de leur temps de rétention avec ceux de composés standards. La séparation est effectuée sur une colonne de phase inverse NOVAPACK (2mm×150mm, WATERS) équilibrée avec 95% de solvant A (acide trifluoroacétique à 0,115%) et 5% de solvant B (acide trifluoroacétique 0,1%, acétonitrile 60%) à un débit de 0,3 ml/min.. Les métabolites sont élués avec un gradient linéaire de 5 à 20% de solvant B en 35 min.. La colonne est ensuite lavée 5 min. avec le solvant B puis rééquilibrée dans les conditions initiales. Les métabolites sont détectés par absorbance en UV à 214 nm, puis l'éluant (0,3 ml/min.) est mélangé au liquide scintillant ULTIMA-FLO AP (PACKARD) (0,7 ml/min.) pour la détection de radioactivité en flux contenu. Les composés standards utilisés sont la phénylalaniné, la phényléthylamine, le phénylpyruvate, le phénylacétaldéhyde, le phényléthanol le phénylacétate, et le phényllactate.

### Résultats

Les résultats sont résumés dans le Tableau I ci-dessous, qui indique, pour chacun des acides aminés testés, la quantité d'acide aminé dégradée (en % de la quantité initiale), après 10 heures d'incubation.

**TABLEAU 1**

| | Sans glucose | | | Avec glucose | | |
|---|---|---|---|---|---|---|
| Acide aminé | Sans cétoacide | Avec cétogfutarate | Avec oxaloacétate | Sans cétoacide | Avec cétoglutarate | Avec oxaloacétate |
| Tyrosine | 3 | 46 | - | 10 | 71 | - |
| Phénylalanine | 5 | 40 | 7 | 13 | 62 | 10 |
| Tryptophane | 8 | 58 | - | 19 | 79 | - |
| Leucine | 4 | 60 | 20 | 20 | 80 | - |

Ces résultats montrent que dans des milieux liquides ne contenant pas de cétoglutarate, la dégradation des trois acides aminés aromatiques et de la leucine est faible. Elle est voisine de 5% en 10 heures dans les milieux sans glucose et de 10 à 20% dans les milieux contenant du glucose.

L'addition d'α-cétoglutarate à ces milieux augmente considérablement la dégradation de tous ces acides aminés. Dans les milieux sans glucose, 40 à 60% des acides aminés sont dégradés en 10 heures et la dégradation atteint 75 à 80% en 40 heures. Dans les milieux contenant du glucose, 60 à 80% des acides aminés sont dégradés en 10 heures et leur dégradation est totale après 40 heures.

L'addition d'oxalo-acétate n'a pas d'effet sur la dégradation des acides aminés aromatiques mais augmente sensiblement celle de la leucine.

Les principaux métabolites détectés sont les cétoacides correspondant à chaque acide aminé, ainsi que leurs produits de dégradation (hydroxyacides et acides carboxyliques).

### EXEMPLE 2. EFFET DE L'ADDITION D'α-CETOGLUTARATE DANS LES FROMAGES SUR LA DEGRADATION DE LA PHENYLALANINE.

### Fabrication de fromage de type pâte pressée non cuite à croûte artificielle.

Cinq petits fromages de type Saint-Paulin (250 g) ont été fabriqués à partir de 10 litres de lait partiellement écrémé (32 g de matière grasse par litre) et pasteurisé 1 min. à 75°C. Le lait est ensemencé à raison de 2% avec une culture d'une nuit de *Lactococcus lactis* (souche NCDO763 de *Lactococcus lactis ssp cremoris)* dans du lait écrémé. L'emprésurage est effectué immédiatement à 33°C en utilisant 0,03% de présure (520 mg/l de chymosine, SBI, France). Pendant le brassage, le caillé est partiellement délactosé en substituant 30% du lactosérum par de l'eau à 32°C. Le caillé est ensuite moulé dans des moules de type KADOVA et pressé.

### Saumurage et affinage des fromages.

Après dépressage, un des fromages est découpé en petits cylindres d'environ 3 g (mini-fromages), pour l'analyse de la dégradation de la phénylalanine.

Deux saumures ont été utilisées pour les mini fromages destinés à l'analyse de la dégradation de la phénylalanine. La première contient 0,1 g de NaCl et 31,25 µCi (0,25 nmoles) de phénylalanine tritiée (L-[2,3,4,5,6-³H] phénylalanine) par ml. La seconde saumure contient en plus des constituants de la première, 50 mg d'α-cétoglutarate par ml. Le pH des deux saumures est ajusté à 5,7. Un mini-fromage est immergé dans 8 ml de chaque saumure pendant 1 heure.

Après salage, les fromages sont conservés au réfrigérateur pendant la nuit ; le lendemain ils sont enrobés de cire alimentaire et mis en cave à 13°C.

### Extraction et analyse des produits de dégradation de la phénylalanine dans les fromages.

Après 10 jours d'affinage, environ 1 g de fromage est homogénéisé dans 2,5 ml de tampon citrate (citrate de sodium 0,2M pH2,2 0,2 g d'EDTA et 0,1 ml de pentachorophénol à 5% par litre). Le mélange est filtré sur papier et le filtrat est précipité en présence d'acide sulfosalicylique à une concentration finale de 3%. Le précipité est éliminé par centrifugation (5 min. à 18000 g) et le surnageant est filtré sur un filtre 0,45 µm. Les produits de dégradation de la phénylalanine sont ensuite séparés et identifiés par HPLC comme décrit à l'exemple 1 ci-dessus.

### Résultats

Les profils de séparation HPLC obtenus après 10 jours d'affinage à 13°C, montrent que seulement 3 à 4% de la phénylalanine marquée ont été dégradés dans le fromage témoin, tandis que 17% ont été dégradés dans le fromage affiné en présence d'α-cétoglutarate. Le phénylpyruvate, ainsi que ses produits de dégradation le phényllactate et le phénylacétate ont été identifiés parmi les métabolites formés.

### EXEMPLE 3. EFFET DE L'ADDITION D'α-CETOGLUTARATE DANS LES FROMAGES SUR LEUR QUALITE OR-GAMOLEPTIQUE.

Des fromages de type Saint-Paulin de 250 g sont fabriqués comme décrit à l'exemple 2 ci-dessus.

Deux de ces fromages sont immergés pendant 3 heures dans 2 litres de saumure à 250 g de NaCl par litre et 2 autres dans 2 litres de saumure contenant 250 g de NaCl et 50 g d'α-cétoglutarate par litre.

D'autre part, deux autres fromages sont découpés chacun en 10 morceaux de 25 g. Dix de ces morceaux sont immergés pendant 2h30 dans 0,75 litre de saumure à 100 g de NaCl et les dix autres dans 0,75 litres d'une saumure contenant 100 g de NaCl et 30 g d'α-cétoglutarate par litre.

Le pH de toutes les saumures est préalablement ajusté à 5,7 avec de l'acide lactique.

Après salage, les fromages sont conservés au réfrigérateur pendant la nuit ; le lendemain, ils sont enrobés de cire alimentaire et mis en cave à 13°C.

### Analyses organoleptiques

Ces analyses ont été effectuées sur les fromages de 250 g.

Le fromage avec α-cétoglutarate et le fromage témoin ont été dégustés après 14 et 28 jours d'affinage à 13°C, par un jury de 8 personnes. 13 caractères ont été notés de 1 à 10 selon leur intensité.

Les caractères évalués sont : l'intensité d'odeur, la qualité globale du fromage, les goûts : salé, acide, doux, sucré et amer, et les caractères aromatiques : fruité, floral, sulfuré, maltolé, lacté, et pied. Les résultats obtenus pour le fromage avec α-cétoglutarate et le fromage témoin ont été comparés par une analyse de variance.

### Résultats

Les résultats sont illustrés par le tableau II ci-dessous, qui regroupe les moyennes des notes attribuées à chaque caractère par un jury de 8 personnes.

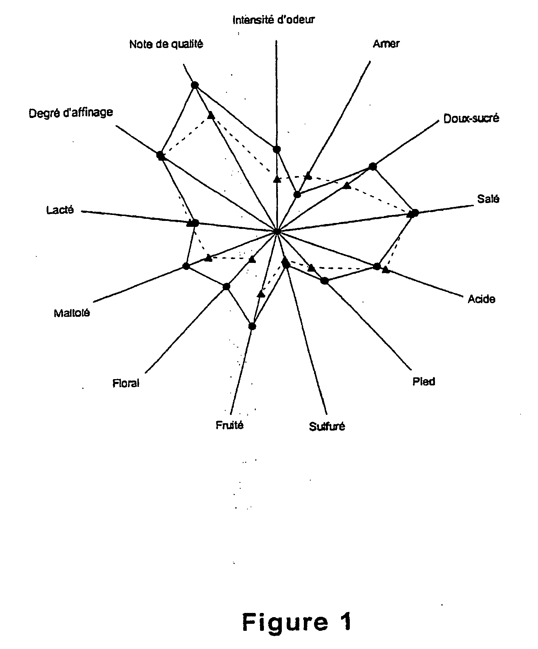

La Figure 1 représente le profil en étoile des notes attribuées au fromage témoin (--▲--) et au fromage avec α-cétoglutarate (―•―) après 28 jours d'affinage.

**TABLEAU II**

| Temps d'affinage | 14 jours | | 28 jours | |
|---|---|---|---|---|
| Caractère noté | Témoin | Essai | Témoin | Essai |
| Intensité d'odeur | 2,08±0,90 | 2,65±1,95 | 1,68±1,33 | 2,60±1,7 |
| Amer | 1,66±0,97 | 2,13±1,30 | 2,02±1,27 | 1,33±0,61 |
| Doux-sucré | 2,65±1,41 | 2,31±1,62 | 2,54±1,35 | 3,53±0,90 |
| Salé | 3,62±1,33 | 4,22±1~09 | 4,05±1,02 | 4,20±0,96 |
| Acide | 2,91±1,49 | 3,68±2,44 | 3,48±2,11 | 3,20±1,49 |
| Pied | 1,08±1,37 | 2,16±1,96 | 1,54±1,53 | 2,11±2,58 |
| Sulfuré | 0,69±0,56 | 0,94±1,53 | 0,91+0,91 | 1,08±1,03 |
| Fruité | 2,00±1,54 | 1,80±1,11 | 2,02±1,50 | 3,11±1,66 |
| Floral | 0,96±1,20 | 1,87±1,81 | 1,14±0,99 | 2,31±1,99 |
| Maltolé | 1,65±1,28 | 1,43±1,28 | 2,20±1,74 | 2,94±2,79 |
| Lacté | 1,85±2,04 | 1,54±1,20 | 2,65±1,65 | 2,48±1,69 |
| Degré d'affinage | 4,62±2,36 | 5,08±2,42 | 4,22±2,37 | 4,31±2,21 |
| Note de qualité | 3,66±2,04 | 2,83±1,54 | 4,20±1,71 | 5,25±1,56 |

Après 14 jours d'affinage, les dégustateurs ont noté peu de différences entre le fromage témoin et l'essai. Seule la note du caractère floral a été significativement plus élevée pour l'essai.

Après 28 jours d'affinage, les notes de caractères aromatiques : fruité, pied, floral, maltolé ; l'intensité d'odeur et la note de qualité sont supérieures pour l'essai. 6 juges sur 8 ont donné une note de qualité nettement supérieure pour l'essai et 1 juge n'a pas observé de différence. Globalement, le jury a souligné "une flaveur de fromage plus prononcée" et "un fromage très parfumé" pour le fromage avec α-cétoglutarate.

Il apparaît donc que l'augmentation de la dégradation de la phénylalanine, mise en évidence par l'analyse chimique, se répercute sur la flaveur des fromages, puisque la note florale, qui est caractéristique des composés de dégradation des acides aminés aromatiques, est significativement plus élevée dans le fromage avec cétoglutarate dégusté à 14 jours.

Après 28 jours d'affinage, l'effet de l'addition d'α-cétoglutarate sur la flaveur est plus nette qu'après 14 jours d'affinage. En particulier l'intensité d'odeur qui est liée à la production de molécules volatiles est significativement plus intense.

En outre, la note globale de qualité montre que l'intensification de la dégradation des acides aminés n'engendre pas de défauts de goût mais améliore plutôt la qualité organoleptique des fromages.

### Analyse sensorielle des arômes (épreuve triangulaire).

Cette analyse a été effectuée sur les morceaux de 25 g. La concentration en cétoglutarate est voisine de zéro pour les fromages témoins et voisine de 5 mg par g de fromage pour les fromages saumurés en présence de cétoglutarate.

L'odeur des fromages avec et sans cétoglutarate a été comparée par une épreuve triangulaire à laquelle 24 juges ont participé.

Cette épreuve consiste à présenter aux juges 3 échantillons, 2 de l'un des fromages, et 1 de l'autre fromage.

On leur demande :
- dans un premier temps d'indiquer quel échantillon est différent des 2 autres et lequel ou lesquels est(sont) le ou les plus odorant(s) ;
- dans un deuxième temps de noter l'intensité de la différence perçue sur une échelle de 1 à 10, et si possible de caractériser cette différence.

L'interprétation statistique consiste à comptabiliser le nombre de réponses correctes (qui ont reconnu l'échantillon différent des deux autres) et à comparer la valeur obtenue à celle figurant dans la table de la loi binomiale pour une probabilité de 1 sur 3 pour savoir s'il existe une différence significative.

### Résultats :

Le fromage affiné en présence de cétoglutarate est significativement plus odorant que le fromage témoin, au seuil de 0,1 % (la différence a été perçue par 18 juges sur24). L'intensité de la différence perçue a été notée en moyenne à 3,22/10 et cette différence est le plus fréquemment qualifiée comme : « odeur plus fromagère ». Ainsi, il apparaît que l'addition de cétoglutarate intensifie réellement le développement d'arôme dans les fromages.

### EXEMPLE 4. EFFET DE L'ADDITION D'α-CETOGLUTARATE DANS LES FROMAGES SUR LA DEGRADATION DES ACIDES AMINES.

Les acides aminés libres présents dans les fromages utilisés dans l'exemple 3 ont été dosés après 14 jours d'affinage.

### Extraction et analyse des acides aminés libres.

Les acides aminés libres sont extraits des fromages selon le protocole décrit pour l'extraction des produits de dégradation de la phénylalanine dans l'exemple 1. Ils sont ensuite analysés à l'aide d'un analyseur automatique d'acides aminés LC3000 (BIOTRONIK) dans les conditions préconisées par le fabricant de l'appareil.

### Résultats

Le tableau III ci-dessous indique les quantités de chaque acide aminé (en nmoles/g de fromage) dans le fromage témoin et dans le fromage avec cétoglutarate. Il indique également la différence entre ces quantités, exprimée d'une part en nmoles/g de fromage et d'autre part en % de la quantité dans le fromage témoin.

**TABLEAU III**

| | Quantité d'acides aminés en nmoles/g de fromage | | | |
|---|---|---|---|---|
| | Témoin | +cétoglutarate | Différence (nmol/g) | Différence en % |
| Aspartate | 543 | 511 | -32 | -5,8 |
| Thréonine | 562 | 545 | -17 | -3 |
| Serine | 985 | 979 | -6 | -0,6 |
| Asparagine | 2838 | 2808 | -30 | -1 |
| Glutamate | 3275 | 3763 | +488 | +15 |
| Glutamine | 2220 | 2250 | +3 | +0,1 |
| Proline | 1899 | 1906 | +7 | +0,3 |
| Glycine | 396 | 384 | -12 | -3 |
| Alanine | 1144 | 1075 | -69 | -6 |
| Citrulline | 399 | 421 | +21 | +5 |
| Valine | 1730 | 1649 | -81 | -4,6 |
| Methionine | 462 | 413 | -49 | -10,6 |
| Isoleucine | 358 | 322 | -37 | -10,3 |
| Leucine | 4999 | 4514 | -485 | -9,7 |
| Tyrosine | 1062 | 1017 | -46 | -4,3 |
| Phénylalanine | 2919 | 2669 | -250 | -8,6 |
| γ-aminobutyrate | 1887 | 2870 | +982 | +52 |
| ornithine | 2354 | 2248 | -106 | -4,5 |
| Lysine | 2327 | 2328 | +1 | +0,04 |

Ces résultats montrent que les quantités de méthionine, d'isoleucine, de leucine et de phénylalanine dans le fromage affiné en présence de cétoglutarate sont environ 10% plus faibles que dans le fromage témoin et les quantités d'aspartate, d'alanine, de valine, de tyrosine et d'ornithine sont environ 5% plus faibles. Ceci démontre que l'addition d'α-cétoglutarate dans les fromages intensifie nettement la dégradation des acides ramifiés et des acides aminés aromatiques bien que dans ce cas, la quantité de cétoglutarate incorporée soit modérée (environ 1mg/g de caillé égoutté).

D'autre part, les quantités de glutamate et de γ-aminobutyrate (qui vient du glutamate) sont nettement plus fortes dans le fromage avec cétoglutarate que dans le fromage témoin. Ceci confirme que le cétoglutarate ajouté a bien été utilisé pour la réaction de transamination et transformé en glutamate (qui par ailleurs est un exhausteur de goût).

Les autres acides aminés sont en quantité équivalente dans les deux fromages.

### EXEMPLE 5 : EFFET DE L'ADDITION D'α-CETOGLUTARATE DANS DES MILIEUX DE REACTION LIQUIDES ET DANS DES PSEUDO-CAILLES SUR LA DEGRADATION DES ACIDES AMINES PAR DIFFERENTES ESPECES DE BACTERIES LACTIQUES.

Cet exemple met en évidence l'influence de l'addition de cétoglutarate sur le catabolisme des acides aminés par d'autres bactéries lactiques que les lactocoques. Cette étude a été réalisée d'une part dans des milieux liquides et d'autre part dans un pseudo-caillé. Les essais en pseudo-caillés représentent une alternative aux essais dans de vrais fromages qui, d'une part, sont longs et coûteux et qui, d'autre part, sont difficilement réalisables avec des souches pures de bactéries lactiques autres que les lactocoques. En effet, dans les fromages, les bactéries lactiques appartenant au genre *Lactobacillus* sont toujours associées à des lactocoques ou à des streptocoques. Par exemple, les *Lactohacilus delbrueckii* et les *Lactobacillus helveticus* sont associés au *Streptococcus thermophilus* dans les pâtes pressées cuites. Les *Lactobacillus* de type *paracasei* ou *plantarum* se développement eux, au cours d'affinage assez long de pâtes pressées fabriquées soit avec lactocoques soit avec des streptocoques. Ces derniers sont d'ailleurs dénommés bactéries lactiques « non starter » contrairement aux bactéries lactiques « starter » qui sont responsables de l'acidification. Pour, cette étude, la phénylalanine et la leucine, qui sont les acides aminés libres majeurs dans les fromages, ont été choisies comme acides aminés marqueurs, respectivement pour les acides aminés aromatiques et pour les acides aminés à chaîne ramifiée.

### Souches de bactéries lactiques et préparation des cellules.

Les bactéries lactiques choisies appartiennent aux genres *Lactobacilluset Streptotoccus.* Ce sont les espèces rencontrées le plus fréquemment en technologie laitière. Le *Lactococcus lactis* NCDO 763 sert de « contrôle » dans cette étude.

Les sept souches utilisées, qui possèdent les caractéristiques de souches classiquement utilisées en technologie laitière, viennent de la collection du CNRZ (INRA, Jouy-en-Josas). Ce sont:
*Lactococcus lactis* ssp. *cremoris* (souche NCDO 763)
*Lactobacillus delbrueckii lactis* (souche CNRZ 12)
*Lactobacillus delbrueckii bulgaricus* (souche CNRSRZ 752)
*Laciobacillus plantarum* (souche CNRZ 1228)
*Lactobacillus helveticus* (souche CNRZ 32)
*Lactobacillus paracasei* (souche CNRZ 316)
*Streptococcus thermophilus* (souche CNRZ 302).

Les lactobacilles sont cultivés dans un milieu MRS (DIFCO), le streptocoque dans un milieu M17 (DIFCO) contenant 10 g/l de lactose et le lactocoque dans le mileu M17 avec glucose. Les cultures sont incubées à 37°C sauf le *Lb. paracasei* et le *Lb. plantarum* qui sont cultivés à 30°C.

Les cellules sont récupérées en début de phase stationnaire de croissance par centrifugation (8000 g, 10 min) et lavées 2 fois avec du tampon glycérophosphate 50 mM pH7.

### Essais en milieux de réaction liquides.

Le milieu de base se compose de tampon Tris/HCl 100 mM pH8 avec 2 mM de l'acide aminé étudié (phénylalanine ou leucine) non marqué et 0,05 µM du même acide aminé tritié (126 mCi/µmol) (L-[2,3,4,5,6-³H] phénylalanine ou L-[4,5-³H] leucine), puis 0,3% de glucose. Pour les essais avec cétoglutarate, 10 mM de ce composé sont ajoutés au milieu de base.

La quantité de cellules correspondante à une DO₄₈₀ de 10 est introduite dans 500 µl de milieu et des aliquotes de 100 µl sont prélevées au temps 0 puis après 10h, 20h et 40h d'incubation à 37°C.

### Essais en pseudo-caillé.

La dégradation d'acides aminés marqués (tritiés) a également été étudiée dans un pseudo-caillé dont la composition se rapproche de celle d'un fromage.

Ce pseudo-caillé est préparé en mélangeant 4,5 ml d'une solution de phosphocaséinate de calcium à 10% stérile (115°C, 10 min) avec 20 µl d'une solution de chlorure de calcium 10M et 0,5 ml d'une solution d'acides aminés simulant la composition en acides aminés libres d'un fromage de type St Paulin âgé de 4 semaines (cf. tableau IV ci-après) et contenant 20µCi de l'acide aminé étudié, marqué au tritium. Pour les essais avec cétoglutarate, celui-ci est ajouté à raison de 4 mg/ml de milieu. Ces deux solutions sont préalablement stérilisées par filtration.

Les cellules provenant d'une culture de 5 ml sont ajoutées à ce mélange juste avant d'y introduire la gluconolactone en poudre à une concentration finale de 15 g/l. Des aliquots de 1 ml sont alors répartis dans des tubes stériles à fond conique, et 3 µl de présure diluée au 1/10ème et stérilisée par filtration sont finalement ajoutés. Le mélange est incubé à 30°C jusqu'à la prise du caillé puis les tubes sont placés dans une étuve à 13°C pour « affinage » pendant 2 et 4 semaines.

**TABLEAU IV**

| | en µmoles/g | en µg/g |
|---|---|---|
| Aspartate | 0,8 | 110 |
| Thréonine | 0,9 | 110 |
| Serine | 1,3 | 140 |
| Asparagine | 2,6 | 340 |
| Glutamate | 5 | 740 |
| Glutamine | 3,2 | 470 |
| Proline | 2,4 | 280 |
| Glycine | 0,5 | 40 |
| Alanine | 1,5 | 130 |
| Valine | 0,5 | 340 |
| Cystéine | 2,9 | 60 |
| Méthionine | 1 | 150 |
| Isoleucine | 0,8 | 100 |
| Leucine | 6,4 | 840 |
| Tyrosine | 1,3 | 240 |
| Phénylalanine | 3,7 | 610 |
| Histidine | 0,6 | 90 |
| Lysine | 2,8 | 410 |

### Extraction et suivi de la dégradation des acides aminés.

Dans les milieux de réaction liquides, les cellules sont éliminées par centrifugation (8000 g, 5 min) et les sumageants sont directement analysés par HPLC avec une détection de radioactivité en flux continu, comme décrit dans l'exemple 1. Cette analyse permet la séparation de l'acide aminé et des différents produits de dégradation. Le pourcentage de dégradation de l'acide aminé est estimé par le pourcentage de radioactivité présent dans le volume d'élution des produits de dégradation.

Pour les pseudo-caillés, le contenu de chaque tube (environ 1 g) est homogénéisé à l'ULTRA TURAX dans 2,5 mi de tampon citrate (citrate de sodium 0,2M pH2,2, 0,2 g d'EDTA et 0,1 ml de pentachlorophénol à 5% par litre). Le mélange est ensuite centrifugé 5 min à 8000 g et le surnageant est précipité en présence d'acide suifosalicylique à une concentration finale de 3%. Après 10 min à 0°C, le précipité est de nouveau éliminé par centrifugation (5 min à 18000 g) et le surnageant est filtré sur un filtre de 0,45 µm. Les produits de dégradation des acides aminés sont ensuite séparés, identifiés et quantifiés par HPLC comme décrit ci-dessus.

### Résultats

1. Les pourcentages de dégradation de la phénylalanine et de la leucine dans les milieux de réaction liquides contenant ou non du cétoglutarate, après 10h et 40h d'incubation à 37°C, sont présentés dans le tableau V.

**TABLEAU V**

| | Phénylalanine | | | | Leucine | | | |
|---|---|---|---|---|---|---|---|---|
| Souches | sans cétoglutarate | | avec cétoglutarate | | sans cétoglutarate | | avec cétoglutarate | |
| | 10h | 40h | 10h | 40h | 10h | 40h | 10h | 40h |
| *Lc.lactis* | 7 | 13 | 71 | 98 | 20 | - | 80 | - |
| *Lb.d.bulgaricus* | 0 | 0 | 14 | 39 | 0 | 0 | 9 | 30 |
| *Lb.d.lactis* | 0 | 0 | 1 | 3 | 0 | 0 | 10 | 27 |
| *Lb.plantarum* | 9 | 11 | 38 | 73 | 6 | 10 | 23 | 42 |
| *Lb. helveticus* | 0 | 0 | 9 | 18 | 0 | 2 | 7 | 25 |
| *St. thermophilus* | *7* | 15 | 25 | 48 | 9 | 10 | 38 | 67 |
| *Lb. paracasei* | 29 | 63 | 66 | 99 | 43 | 54 | 80 | 85 |

Ces résultats montrent que pour toutes les souches étudiées, excepté le *Lb. paracasei,* la dégradation des acides aminés dans les milieux ne contenant pas de cétoglutarate est faible : elle reste inférieure à 15% même après 40 heures d'incubation à 37°C. L'addition de cétoglutarate dans les milieux augmente considérablement la dégradation des acides aminés par toutes les souches étudiées. Le pourcentage de dégradation est au minimum multiplié par 2. Des résultats similaires ont été obtenus dans des milieux ne contenant pas de glucose.

La dégradation observée en l'absence de cétoglutarate avec le *Lb. paracasei* indique que pour cette bactérie, soit le pyruvate provenant de la dégradation du glucose est un accepteur du groupement aminé dans la réaction de transamination, soit qu'il existe une autre voie de dégradation que la transamination. Néanmoins, avec cette souche également, l'addition de cétoglutarate intensifie nettement la dégradation des deux acides aminés testés.

2. Les pourcentages de dégradation de la phénylalanine et de la leucine dans les pseudo-caillés après 2 et 4 semaines d'affinage à 13°C sont présentés dans le tableau VI.

**TABLEAU VI**

| | Phényalanine | | | | Leucine | | | |
|---|---|---|---|---|---|---|---|---|
| Souches | sans cétoglutarate | | avec cétoglutarate | | sans cétoglutarate | | avec cétoglutarate | |
| | 2 sem | 4 sem | 2 sem | 4 sem | 2 sem | 4 sem | 2 sem | 4 sem |
| *Lc.lactis* | 3 | 3 | 4 | 6 | 5 | 6 | 8 | 11 |
| *Lb.d.bulgaricus* | 0 | 0 | 18 | 22 | 1 | 1 | 7 | 10 |
| *Lb.d.lactis* | 0 | 0 | 11 | 7 | 0 | 0 | 3 | 4 |
| *Lb.plantarum* | 1 | 2 | 7 | 13 | - | - | - | - |
| *Lb. helveticus* | 0 | 0 | 6 | 10 | 0 | 0 | 0 | 2 |
| *St. thermophilus* | 0 | 1 | 2 | 3 | 0 | 0 | 5 | 9 |
| *Lb. paracasei* | 0 | 0 | 7 | 8 | 0 | 0 | 10 | 10 |

Comme dans les milieux liquides, pour la plupart des souches de bactéries lactiques étudiées, la dégradation des acides aminés dans les pseudo-caillés sans cétoglutarate est quasiment nulle. Par contre, en présence de cétoglutarate, toutes les souches dégradent la phénylalanine et la leucine, et la dégradation après 4 semaines varie entre 2% et 22% selon les souches et l'acide aminé considéré. Il est à noter que les pourcentages de dégradation observés dans ces pseudo-caillés avec *Lactococcus lactis* après 4 semaines sont du même ordre que ceux trouvés dans des fromages de type St Paulin fabriqués avec cette souche et affinés également 4 semaines en présence de cétoglutarate (9,8% et 12,8% respectivement pour la phénylalanine et la leucine dans les fromages, à comparer avec 6% et 11% dans les pseudo-caillés). Par conséquent les résultats obtenus avec ce modèle peuvent être considérés comme représentatifs de ce qui serait observé dans des fromages.

## Revendications

1. Procédé pour intensifier la flaveur d'un fromage ou d'un produit alimentaire à arôme de fromage dont la préparation comprend une étape de maturation en présence de bactéries lactiques, **caractérisé en ce que** l'on utilise, pour augmenter le catabolisme des acides aminés par lesdites bactéries, un additif de préparation comprenant de l'α-cétoglutarate.

2. Procédé selon la revendication 1, **caractérisé en ce que** l'étape de maturation est mise en oeuvre en présence d'au moins une bactérie lactique appartenant à l'un des genres *Lactococcus, Lactobacillus, Streptococcus,* et *Leuconostoc,* et **en ce que** l'additif de préparation est ajouté audit produit, préalablement à ladite étape de maturation ou au cours de celle-ci.

3. Procédé selon la revendication 2, **caractérisé en ce que** ladite bactérie lactique est choisie dans le groupe constitué par *Lactococcus lactis* ssp *lactis, Lactococcus lactis* ssp. *cremoris, Lactococcus lactis* ssp. *diacetylactis, Lactobacillus delbrueckii lactis, Lactobacillus delbrueckii bulgaricus, Lactobacillus plantarum, Lactobacillus helveticus, Lactobacillus paracasei, Streptococcus thermophilus.*

4. Procédé selon une quelconque des revendications 1 à 3, **caractérisé en ce que** ledit additif est ajouté à raison de 0,5 à 10 mg d'α-cétoglutarate par gramme de produit non-maturé.

5. Procédé selon une quelconque des revendications 1 à 4, **caractérisé en ce que** ledit additif est introduit dans la saumure utilisée pour le salage.

6. Procédé selon la revendication 5, **caractérisé en ce que** ledit additif est additionné à raison de 10 à 100 grammes d'α-cétoglutarate par litre de saumure.

7. Procédé d'obtention d'un fromage ou produit alimentaire à arôme de fromage, comprenant une étape de maturation en présence de bactéries lactiques, **caractérisé en ce que** l'on utilise, pour intensifier la flaveur dudit produit en augmentant le catabolisme des acides aminés par lesdites bactéries, un additif de préparation comprenant de l'α-cétoglutarate.

8. Utilisation d'α-cétoglutarate pour augmenter le catabolisme des acides aminés par des bactéries lactiques afin d'intensifier la flaveur d'un fromage ou d'un produit alimentaire à base de fromage dont la préparation comprend une étape de maturation en présence desdites bactéries.

9. Utilisation selon la revendication 8, **caractérisée en ce que** ledit fromage est un fromage à pâte pressée sans flore de surface.

## Claims

1. Process for enhancing the flavour of a cheese or a cheese-flavoured food product whose preparation comprises a maturation step in the presence of lactic acid bacteria, **characterised in that** a preparation additive comprising α-ketoglutarate is used to increase the catabolism of the amino acids by said bacteria.

2. Process according to Claim 1, **characterised in that** the maturation step is carried out in the presence of at least one lactic acid bacterium belonging to one of the genera *Lactococcus, Lactobacillus, Streptococcus* and *Leuconostoc,* and **in that** the preparation additive is added to said product, prior to said maturation step or during it.

3. Process according to Claim 2, **characterised in that** said lactic acid bacterium is chosen from the group consisting of *Lactococcus lactis* ssp. *lactis, Lactococcus lactis* ssp. *cremoris, Lactococcus lactis* ssp. *diacetylactis, Lactobacillus delbrueckii lactis, Lactobacillus delbrueckii bulgaricus, Lactobacillus plantarum, Lactobacillus helveticus, Lactobacillus paracasei, Streptococcus thermophilus.*

4. Process according to any one of Claims 1 to 3, **characterised in that** said additive is added in an amount of 0.5 to 10 mg of α-ketoglutarate per gram of non-matured product.

5. Process according to any one of Claims 1 to 4, **characterised in that** said additive is introduced into the brine used for the salting.

6. Process according to Claim 5, **characterised in that** said additive is added in an amount of 10 to 100 grams of α-ketoglutarate per litre of brine.

7. Process for producing a cheese or a cheese-flavoured food product, comprising a maturation step in the presence of lactic acid bacteria, **characterised in that** a preparation additive comprising α-ketoglutarate is used to enhance the flavour of said product by increasing the catabolism of the amino acids by said bacteria.

8. Use of α-ketoglutarate for increasing the catabolism of the amino acids by lactic acid bacteria in order to enhance the flavour of a cheese or of a cheese-based food product whose preparation comprises a maturation step in the presence of said bacteria.

9. Use according to Claim 8, **characterised in that** said cheese is a pressed cheese without surface flora.

## Patentansprüche

1. Verfahren zum Verstärken des Geschmacks eines Käses oder eines Nahrungsmittelproduktes mit Käsearoma, dessen Herstellung einen Reifungsschritt in Gegenwart von Lactobazillen umfaßt, **dadurch gekennzeichnet, daß** zur Erhöhung des Katabolismus von Aminosäuren durch die Bakterien ein Herstellungszusatz verwendet wird, der α-Ketoglutarat aufweist.

2. Verfahren nach Anspruch 1, **dadurch gekennzeichnet, daß** der Reifungsschritt in Gegenwart von mindestens einem Lactobazillus durchgeführt wird, der zu einer der Gattungen *Lactococcus, Lactobacillus, Streptococcus* und *Leuconostoc* gehört, sowie **dadurch**, daß der Herstellungszusatz dem Produkt vor dem Reifungsschritt oder in dessen Verlauf zugegeben wird.

3. Verfahren nach Anspruch 2, **dadurch gekennzeichnet, daß** der Lactobazillus aus der Gruppe bestehend aus *Lactococcus lactis* ssp. *lactis, Lactococcus lactis* ssp. *cremoris, Lactococcus lactis* ssp. *diacetylactis, Lactobacillus delbrueckii lactis, Lactobacillus delbrueckii bulgaricus, Lactobacillus plantarum, Lactobacillus helveticus, Lactobacillus paracasei, Streptococcus thermophilus* ausgewählt ist.

4. Verfahren nach einem der Ansprüche 1 bis 3, **dadurch gekennzeichnet, daß** der Zusatz in einem Verhältnis von 0,5 bis 10 mg α-Ketoglutarat pro Gramm von nicht gereiftem Produkt zugegeben wird.

5. Verfahren nach einem der Ansprüche 1 bis 4, **dadurch gekennzeichnet, daß** der Zusatz in die zum Salzen verwendete Salzlake eingebracht wird.

6. Verfahren nach Anspruch 5, **dadurch gekennzeichnet, daß** der Zusatz in einem Verhältnis von 10 bis 100 Gramm α-Ketoglutarat pro Liter Salzlake zugegeben wird.

7. Verfahren zur Herstellung eines Käses oder Nahrungsmittelproduktes mit Käsearoma, das einen Reifungsschritt in Gegenwart von Lactobazillen umfaßt, **dadurch gekennzeichnet, daß** zur Verstärkung des Geschmacks des Produktes vermittels Erhöhung des Katabolismus von Aminosäuren durch die Bakterien ein Herstellungszusatz verwendet wird, der α-Ketoglutarat aufweist.

8. Verwendung von α-Ketoglutarat zum Erhöhen des Katabolismus von Aminosäuren durch Lactobazillen, um den Geschmack eines Käses oder eines Nahrungsmittels auf Käsebasis zu verstärken, dessen Herstellung einen Reifungsschritt in Gegenwart der Bakterien umfaßt.

9. Verwendung nach Anspruch 8, **dadurch gekennzeichnet, dass** der Käse ein Preßkäse ohne Schimmelschicht ist.
